# EUROPÄISCHE PATENTANMELDUNG

(11) **EP 2 293 400 A1**
(43) Veröffentlichungstag der Anmeldung: **09.03.2011**
(21) Anmeldenummer: 09169707.8
(22) Anmeldetag: 08.09.2009
(51) Int. Cl.: H02G 5/06

(54) **Abschirmelektrode für Gießharz-GIS-Isolatoren**

(71) Anmelder: ABB Technology AG, 8050 Zürich (CH)
(72) Erfinder: Alig, Peter, CH-8820, Wädenswil (CH); Uhl, Ralph, D-60316, Frankfurt (DE); Willi, Thomas-Jürg, CH-8050, Zürich (CH)
(74) Vertreter: ABB Patent Attorneys

(57) **Zusammenfassung**

Die Erfindung betrifft einen Isolator für eine Hochspannungsschaltanlage, mit einem Isolatorkörper, mindestens einer elektrisch leitfähigen Eingussarmatur, und mit mindestens einer elektrisch leitfähigen Elektrode als Feldsteuerelement, wobei die Elektrode in Form einer Wendel aus einem drahtförmigen Material ausgebildet ist.

## Beschreibung

Die Erfindung betrifft einen Isolator für eine Hochspannungsschaltanlage. Derartige Hochspannungsschaltanlagen sind beispielsweise als gasisolierte Schaltanlagen (GIS; gas insulated switchgear) ausgebildet.

Aus der EP 0 810 705 B1 ist ein derartiger Isolator bekannt, der einen Isolatorkörper aus gehärtetem Gießharz und zumindest eine mit Hochspannung beaufschlagte, in den Isolatorkörper eingegossene, metallische Eingussarmatur aufweist. Zumindest eine in den Isolatorkörper eingegossene, elektrisch leitfähige Elektrode weist Anschluss- oder Verbindungsteile zur elektrischen Verbindung der Elektrode mit jeweils einem entsprechend zugeordneten Potential auf. Die Elektrode, die auch als Abschirmelektrode bezeichnet wird, dient als Feldsteuerelement zum Steuern des elektrischen Feldes. Bei dem bekannten Isolator ist die Elektrode aus einem gießbaren Formstoff, einem elektrisch leitfähigen Kunststoff, gefertigt. Der Querschnitt ist kreisförmig, jedoch kann die Elektrode auch einen ellipsenförmigen Querschnitt aufweisen.

Ein Vorteil der vorliegenden Erfindung besteht in der Bereitstellung eines verbesserten Isolators, der einfacher herzustellen ist, und bei welchem die maximale Feldstärke verringert oder verringerbar ist, also die dielektrische Belastung verringert oder verringerbar ist.

Gemäß der Erfindung wird ein Isolator gemäß Patentanspruch 1 sowie eine gasisolierte Schaltanlage gemäß Patentanspruch 18 zur Verfügung gestellt. Vorteilhafte Ausführungsformen der Erfindung sind in den abhängigen Patentansprüchen angegeben.

Die Elektrode in Form einer Wendel (Helix) lässt sich einfach durch Wickeln eines drahtförmigen Materials herstellen. Eine derartige wendelförmige Elektrode ist an sich formstabil, zieht sich jedoch geringfügig zusammen, wenn sich das Gießharz, aus welchem der Isolatorkörper des Isolators hergestellt wird, abkühlt und kontrahiert. Hierdurch kann das Auftreten unerwünschter kleiner Hohlräume im Gießharz verhindert werden.

Typischerweise ist der Isolatorkörper scheibenförmig, und ist die Elektrode radial im Randbereich des Isolatorkörpers und in Umfangsrichtung des Isolatorkörpers angeordnet. Die Elektrode kann aus einem einzigen Elektrodensegment bestehen, aber auch aus mehreren, insbesondere drei, elektrisch voneinander isolierten Elektrodensegmenten. So sind beispielsweise bei einem Isolator für drei Phasen drei Eingussarmaturen und drei diesen entsprechend angeordnete Elektrodensegmente vorgesehen.

Insbesondere bei längeren Elektrodensegmenten empfiehlt es sich, dass zumindest ein bzw. jedes Elektrodensegment aus mehreren, beispielsweise zwei, Untersegmenten besteht, die elektrisch miteinander verbunden sind.

Das drahtförmige Material der Wendel des Isolators kann einen elektrisch leitfähigen Kunststoff umfassen. Das drahtförmige Material der Wendel des Isolators kann jedoch auch ein Metall oder eine Metalllegierung sein. Dann lässt sich die Wendel einfach durch Wickeln herstellen.

Je nach Verwendungszweck weist jedes Elektrodensegment an seinen Enden je ein Anschlussteil auf, das dazu dient, das Elektrodensegment an ein gewünschtes Potential zu legen, üblicherweise Erdpotential.

Die Einhüllende der Wendel der Elektrode ist ein Zylinder, der entsprechend dem Verlauf der Elektrode entsprechend der Umfangsrichtung des Isolatorkörpers gebogen ist.

Der Querschnitt der Einhüllenden der Wendel (entsprechend der Querschnitt eines von der Wendel umschlossenen Zylinders) kann kreisförmig sein, oval (elliptisch), dreieckig, rechteckig, oder vieleckig (mit mehr als vier Ecken). Typischerweise weist die Einhüllende der Wendel einen ellipsenartigen Querschnitt auf. Hierbei ist jeweils darauf zu achten, dass der Querschnitt keine scharfen Ecken, also enge Krümmungsradien, aufweist, sondern möglichst weich gerundet ist, um Konzentrationen der elektrischen Feldstärke zu verhindern.

Bei einer Ausgestaltung der Erfindung ist der ellipsenartige Querschnitt der Einhüllenden der Wendel des Isolators eine so genannte Superellipse, bei welcher die beiden längeren und die beiden kürzeren Seiten einer Windung der Wendel im Vergleich zu einer Ellipse jeweils partiell abgeflachter verlaufen, so dass der Querschnitt der Einhüllenden rechteckförmiger als bei einer Ellipse ist. Eine derartige, superellipsenförmige Wendel lässt sich beispielsweise durch Wickeln eines geeigneten Drahtmaterials, etwa aus Metall oder einer Metalllegierung, um einen rechteckförmigen Kern mit verrundeten Kanten herstellen. Alternativ ist eine Superellipse auch durch ein Wickeln von Windungen auf einen ellipsenförmigen Kern mit anschließender Verformung, etwa mittels eines quer zur Umfangsrichtung aufgebrachten Pressdruckes, erzielbar.

Bei dem Isolator weist typischerweise der Querschnitt der Einhüllenden der Wendel einen größeren Durchmesser und einen kleineren Durchmesser senkrecht zu diesem auf, und verläuft der größere Durchmesser parallel zu einer Längsachse des Isolatorkörpers.

Jeweils benachbarte Windungen der Wendel weisen mit Vorteil einen so geringen Abstand in Richtung des Verlaufs der Wendel auf, so dass die erfindungsgemässe Elektrode ein dielektrisches Verhalten ähnlich einem der Wendel entsprechenden Körper aus Vollmaterial aufweist. Mit anderen Worten ausgedrückt ist das dielektrische Verhalten der erfindungsgemäßen gewendelten Elektrode in einem elektrischen Feld zumindest ähnlich demjenigen einer Elektrode, die in Umfangsrichtung des Isolators gesehen, einen Querschnitt entsprechend dem Querschnitt der Einhüllenden der Wendel der erfindungsgemäßen gewendelten Elektrode aufweist. Als Beispiel seien an dieser Stelle torusförmige oder torussegmentförmige Elektroden vom Stand der Technik genannt, welche keine Windungen im Sinne der vorliegenden Erfindung aufweisen.

Die in Umfangsrichtung des Isolatorkörpers verlaufende Elektrode kann so ausgebildet sein, dass an der radial inneren Seite der Elektrode einander benachbarte Windungen der Wendel aneinander anstoßen, während an der radial äußeren Seite der Wendel einander benachbarte Windungen der Wendel voneinander beabstandet angeordnet sind.

Je nach Anforderungen ist der Isolator gemäß der vorliegenden Erfindung beispielsweise als Schottisolator oder als Stützisolator ausgebildet. Bei einer Ausbildung als Schottisolator ist der Isolator so ausgebildet, dass er den beträchtlichen Druckbeanspruchungen standhalten kann, die in einer gasisolierten Schaltanlage auftreten.

Vorzugsweise bildet das eine Elektrodensegment bzw. bilden die elektrisch voneinander isolierten Elektrodensegmente jeweils eine Elektrode eines Teilentladungsdetektors (beispielsweise einer gasisolierten Schaltanlage). Hierdurch werden TE-Messungen in kleineren, besser lokalisierbaren Bereichen entsprechend jeweils einem Elektrodensegment ermöglicht, im Vergleich zu einem Fall, bei welchem nur eine einzige Elektrode (Feldsteuerelement) vorgesehen ist.

Wenn jedes Elektrodensegment aus mehreren Untersegmenten besteht, die an einer Verbindungsstelle elektrisch miteinander verbunden sind, kann die Verbindungsstelle ein Anschlussteil aufweisen, das zur Bereitstellung eines elektrischen Abgriffs für einen Teilentladungsdetektor ausgebildet ist.

Die Erfindung wird nachstehend anhand zeichnerisch dargestellter Ausführungsbeispiele näher erläutert, aus welchen weitere Vorteile und Merkmale hervorgehen. Es zeigt:
- FIG. 1: einen Vertikalschnitt durch eine Anordnung aus einem erfindungsgemäßen Isolator und einer diesen einspannenden Kapselung, die schematisch als zwei Rohrabschnitte dargestellt ist, die jeweils an ihrem Ende einen Flansch aufweisen;
- FIG. 2: eine Ansicht eines Abschnitts einer wendelförmigen Elektrode gemäß der Erfindung;
- FIG. 3: eine schematische Darstellung jeweils einer Wendel einer Elektrode mit elliptischer (Fig. 3(a)) bzw. superelliptischer (Fig. 3(b)) Form;
- FIG. 4: ein Untersegment eines Elektrodensegments;
- FIG. 5, 6: jeweils ein Elektrodensegment, bestehend aus einer Kombination von jeweils zwei Untersegmenten; und
- FIG. 7(a)-9(b): jeweils eine Aufsicht auf einen Horizontalschnitt durch einen scheibenförmigen Isolator mit drei Eingussarmaturen und drei entsprechend angeordneten Elektrodensegmenten.

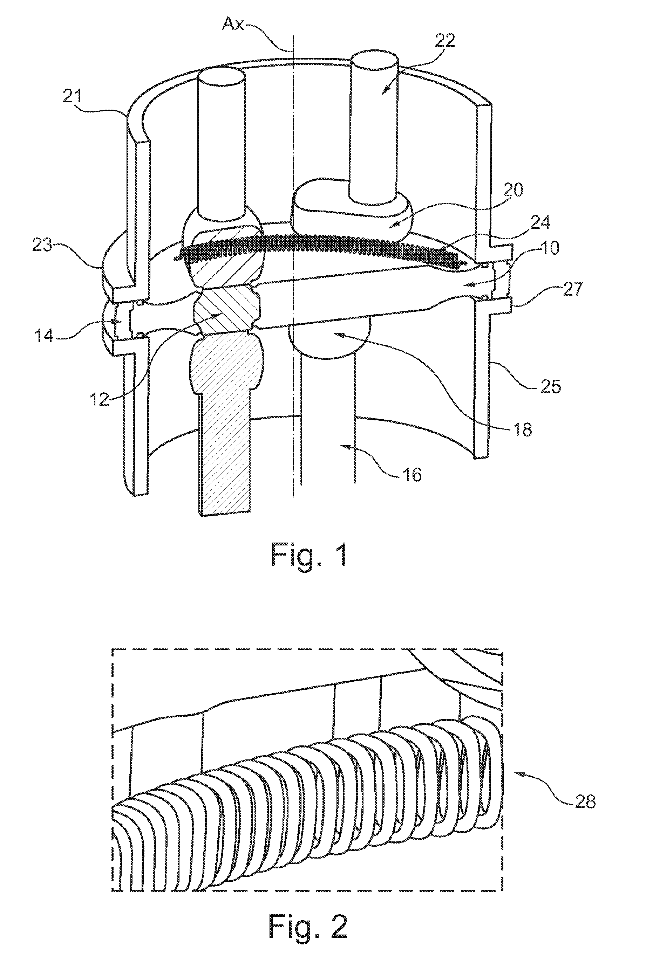

FIG. 1 zeigt schematisch einen Abschnitt einer Metallkapselung einer gasisolierten Schaltanlage, welche einen oberen, rohrförmigen Abschnitt 21 aufweist, der mit einem Flansch 23 versehen ist, und einen unteren rohrförmigen Abschnitt 25, der ebenfalls einen Flansch 27 aufweist. Zwischen den beiden Flanschen 23, 27 ist ein scheibenförmiger Isolatorkörper 10 gemäß der Erfindung eingespannt, wobei an dessen Außenumfang ein Isolatorring 14 vorgesehen ist. In dem Vertikalschnitt von FIG. 1 ist eine elektrisch leitfähige, metallische Eingussarmatur 12 erkennbar. Ein elektrischer Leiter besteht aus einem unteren Leiterstück 16, einem Steckkontakt 18, einer Eingussarmatur (in FIG. 1 nicht sichtbar; entsprechend der Eingussarmatur 12), einem Verdrehstück 20, und einem Leiterstück 22. Eine wendelförmige Elektrode 24 gemäß der Erfindung erstreckt sich auf einem Kreisbogen um den gesamten Umfang des Isolatorkörpers 10 herum, radial etwas innerhalb des Außenumfangs des Isolatorkörpers 10. Eine Längsachse Ax erstreckt sich senkrecht durch den Isolatorkörper 10. Anders ausgedrückt definiert die Scheibenform des Isolatorkörpers 10 die Längsachse (Ax).

FIG. 2 zeigt schematisch eine Elektrode 28 gemäß der Erfindung, deren Form jener der Elektrode 24 in FIG. 1 entspricht.

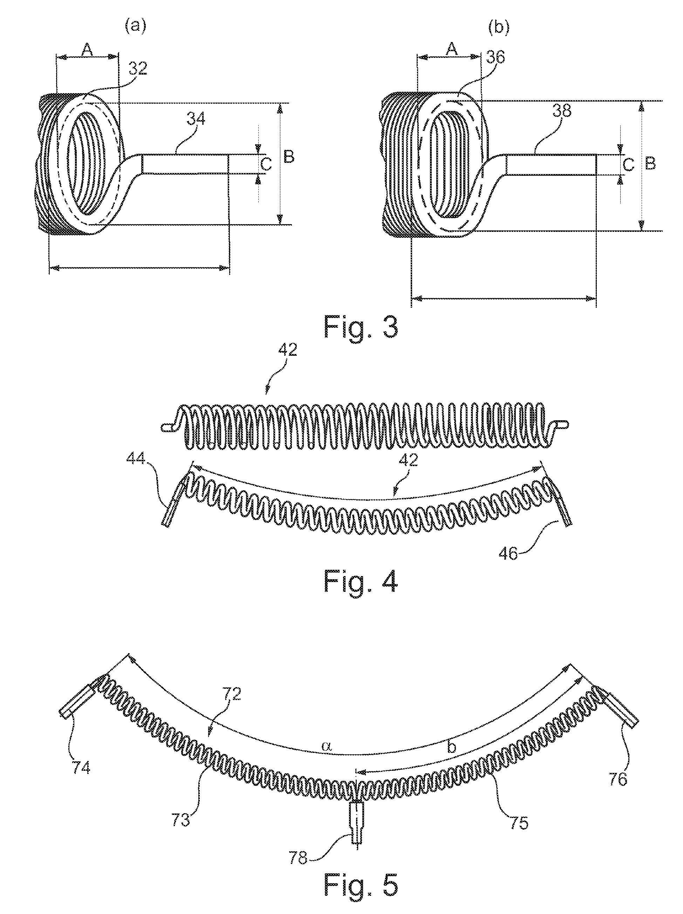

FIG. 3(a) zeigt schematisch den ellipsenförmigen Querschnitt der Einhüllenden einer Elektrode 32, welche ein Anschlussteil 34 aufweist. FIG. 3(b) zeigt schematisch den Querschnitt der Einhüllenden einer Elektrode 36 gemäß der Erfindung, welcher die Form einer Superellipse aufweist, wobei die Elektrode mit einem Anschlussteil 38 versehen ist. Aus einem Vergleich der FIG. 3(a) und FIG. 3(b) wird deutlich, dass die Länge "A" der kleinen Halbachse, die Länge "B" der großen Halbachse, und der Durchmesser "C" des Anschlussteils in diesen beiden Figuren gleich sind.

Bei einem scheibenförmigen Isolatorkörper erstreckt sich die in FIG. 3 dargestellte Länge "A" in dessen Radialrichtung und die Länge "B" in dessen Axialrichtung, also in Richtung der Längsachse Ax in FIG. 1. Typischerweise ist die Länge "A" kleiner als die Länge "B", und ist das Verhältnis A:B etwa 1:2 oder kleiner. Die in Figur 3b dargestellte Elektrode, beziehungsweise das Elektrodensegment, wurde durch ein Wickeln von Windungen auf einen ellipsenförmigen Kern mit anschließender Verformung, etwa mittels eines quer zur Umfangsrichtung aufgebrachten Pressdruckes, gebildet.

Die FIG. 4 zeigt ein Untersegment zur Ausbildung eines aus zumindest zwei Untersegmenten bestehenden Elektrodensegments gemäß der Erfindung, wobei oben in der Figur das Untersegment abgewickelt dargestellt ist, und unten jeweils gebogen, so dass das Untersegment entlang dem Umfang eines Kreises verläuft.

Das Untersegment 42 von FIG. 4 weist an seinen Enden Anschlussteile 44, 46 auf.

FIG. 5 zeigt ein Elektrodensegment 72, das aus einem Untersegment 73 und einem Untersegment 75 besteht, die miteinander verbunden sind. Das Untersegment 75 in FIG. 5 entspricht dem Untersegment 42 von FIG. 4. Diese beiden Untersegmente weisen ein gemeinsames Anschlussteil 78 auf (ausgebildet etwa durch Verquetschen des Anschlussteils 44 und des Anschlussteils 56). Das gesamte Elektrodensegment 72 überspannt einen Winkel von α+β Grad. Wenn das Anschlussteil 78 als TE-Sensoranschluss dienen soll, stellt der Verquetschvorgang nebst der mechanischen Verbindung der drei Bauteile 73, 75, 78 gleichzeitig eine zuverlässig elektrisch leitende Verbindung sicher. Je nach Beschaffenheit der Bauteile 73, 75, 78 ist anstelle der Verquetschung beispielsweise auch eine Lötverbindung oder eine dauerfeste Rastverbindung denkbar.

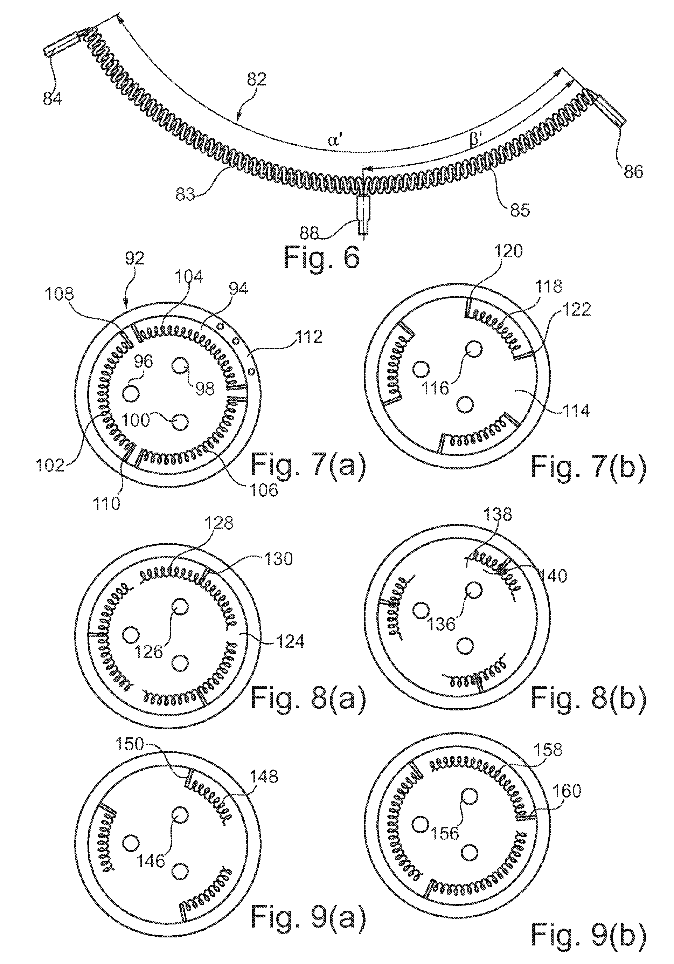

Ein weiteres Elektrodensegment 82, das einen Winkel von α'+β' Grad überspannt, ist in FIG. 6 dargestellt. Das Elektrodensegment 82 von FIG. 6 besteht aus einem Untersegment 83 und einem Untersegment 85.

Selbstverständlich sind auch andere Kombinationen von Untersegmenten zur Ausbildung von Elektrodensegmenten möglich.

Beispiele für eine 3-Phasen-Anordnung eines Isolators zeigen die FIG. 7(a) bis 9(b). Die Längsachse der in den FIG. 7(a) bis 9 (b) gezeigten Isolatorkörper verläuft jeweils senkrecht zur Blattebene der Figuren. Der in FIG. 7(a) dargestellte Isolator 92 weist einen scheibenförmigen Isolatorkörper 94 mit drei Eingussarmaturen 96, 98, 100 für jeweils eine der drei Phasen auf. Entsprechend den drei Eingussarmaturen sind drei Elektrodensegmente, elektrisch voneinander getrennt, vorgesehen, nämlich Elektrodensegmente 102, 104, 106.

Der in FIG. 7(a) dargestellte scheibenförmige Isolator 92 und die in den FIG. 7(b) bis 9(b) dargestellten Isolatoren (nicht mit einem Bezugszeichen bezeichnet) weisen jeweils drei Eingussarmaturen (in FIG. 7(a) mit den Bezugszeichen 96, 98, 100 bezeichnet) und drei entsprechend, also jeweils längsmittig angeordnete Elektrodensegmente (in FIG. 7(a) mit den Bezugszeichen 102, 104, 106 bezeichnet) auf. Ein in der gasisolierten Schaltanlage in eingebautem Zustand geerdeter Außenring 112 umschließt den Isolatorkörper 94 des Isolators 92 in FIG. 7(a), und auch die in den FIG. 7(b) bis 9(b) dargestellten Isolatoren weisen jeweils einen derartigen Außenring auf.

In FIG. 7(a) weist jedes Elektrodensegment 102, 104, 106 der Elektrode an seinen beiden Enden in Umfangsrichtung jeweils ein Anschlussteil auf, wie dies beispielhaft anhand des Elektrodensegments 102 mit den beiden Anschlussteilen 108, 110 dargestellt ist. Die Anschlussteile (beispielhaft die Anschlussteile 108, 110 des Elektrodensegments 102) dienen dazu, das Elektrodensegment 102 an ein gewünschtes Potential zu legen, üblicherweise Erdpotential. Darüber hinaus dienen die Anschlussteile 108, 110 auch zur mechanischen Fixierung des Elektrodensegments 102, wenn das Elektrodensegment in ein Gießharz zur Ausbildung des Elektrodenkörpers 94 eingebracht wird.

Der Isolator in FIG. 7(b) ist ähnlich wie der in FIG. 7(a) dargestellte Isolator 92 ausgebildet, also mit drei Eingussarmaturen und drei Elektrodensegmenten versehen, wobei eine Eingussarmatur 116 und ein Elektrodensegment 118, welches Anschlussteile 120, 122 aufweist, in einem Isolatorkörper 114 mit Bezugszeichen bezeichnet sind. Die Elektrodensegmente in FIG. 7(b) sind in Umfangsrichtung kürzer als die Elektrodensegmente 102, 104, 106 in FIG. 7(a).

Die FIG. 8(a) bis 9(b) verdeutlichen die Ausbildung von Isolatoren, die ansonsten den in FIG. 7(a) und 7(b) dargestellten Isolatoren entsprechen, die ein Anschlussteil aufweisen, das jeweils zur Bereitstellung eines elektrischen Abgriffs zur Verbindung mit einem Teilentladungsdetektor ausgebildet ist. In den FIG. 8(a) und 8(b) ist ein Anschlussteil 130 bzw. 140 eines Elektrodensegments 128 bzw. 138 längsmittig angeordnet, entsprechend der Position einer Eingussarmatur 126 bzw. 136. Der Isolatorkörper ist in FIG. 8(a) mit dem Bezugszeichen 124 bezeichnet.

Dagegen ist in den FIG. 9(a) und 9(b) das jeweilige Anschlussteil 150 bzw. 160 an einem Ende des zugehörigen Elektrodensegments 148 bzw. 158 vorgesehen. Die Position der zugehörigen Eingussarmatur 146 bzw. 156 ist daher gegenüber dem Anschlussteil 150 bzw. 160 des Elektrodensegments 148 bzw. 158 versetzt angeordnet.

Das Material des "Drahts", aus welchem die Elektroden, Elektrodensegmente bzw. - untersegmente bei den geschilderten Ausführungsformen in Form einer Wendel gewickelt sind, ist ein elektrisch leitfähiges Metallmaterial, zum Beispiel Aluminiumdraht, oder ein elektrisch leitfähiger Kunststoff, beispielsweise ein an sich nicht leitfähiges Kunststoffmaterial mit darin eingebetteten leitfähigen Teilchen.

Die Dicke ("C" in FIG. 3) des drahtförmigen Materials ist hierbei so gewählt, dass die Wendel während des Gießvorgangs mit Gießharz formstabil bleibt. Das drahtförmige Material kann einen runden oder einen anderen Querschnitt aufweisen.

Zur besseren Einbettung in das Gießharz und zur besseren Verbindung mit diesem ist die Oberfläche des drahtförmigen Materials rau ausgebildet. Dies kann beispielsweise dadurch erfolgen, dass das drahtförmige Material vor dem Vergießvorgang aufgeraut wird, zum Beispiel durch einen Strahlvorgang wie Sand- oder Staubstrahlen.

Darüber hinaus kann das drahtförmige Material der Wendel auch mit einer Oberflächenbeschichtung versehen sein, etwa um die Haftung an dem Gießharz zu verbessern.

Der in den FIG. 1 und 7(a)-9(b) dargestellte Isolator gemäß der Erfindung ist als Schottelektrode für eine gasisolierte Schaltanlage einer Nennspannung (zwischen jeweils zwei Phasen) von mehr als 170 kV ausgebildet. Die Elektrode 24 in FIG. 1 bzw. die Elektrodensegmente 102, 104, 106 in FIG. 7(a) verlaufen entlang einem Kreis, wobei sich die Elektrode 24 in FIG. 1 entlang dem gesamten Umfang des Isolatorkörpers erstreckt.

Das Gießharz, aus welchem der Isolatorkörper 10 in FIG. 1 bzw. der Isolatorkörper 94 in FIG. 7(a) besteht, ist bei dieser Ausführungsform ein Epoxydharz.

### Liste der Bezugszeichen:

- 10: Isolatorkörper
- 12: Eingussarmatur
- 14: Isolatorring
- 16: Leiterstück
- 18: Steckkontakt
- 20: Verdrehstück
- 21: oberer Abschnitt
- 22: Leiterstück
- 23: Flansch
- 24: Elektrode (wendelförmig)
- 25: unterer Abschnitt
- 27: Flansch
- 28: Elektrode
- 32: Elektrode (Ellipse)
- 34: Anschlussteil
- 36: Elektrode (Superellipse)
- 38: Anschlussteil
- 42: Untersegment (Fig. 4)
- 44: Anschlussteil
- 46: Anschlussteil
- 72: Elektrodensegment (Fig. 5)
- 73: Untersegment
- 74: Anschlussteil
- 75: Untersegment
- 76: Anschlussteil
- 78: Anschlussteil
- 82: Elektrodensegment (Fig. 6)
- 83: Untersegment
- 84: Anschlussteil
- 85: Untersegment
- 86: Anschlussteil
- 88: Anschlussteil
- 92: Isolator (FIG. 7(a))
- 94: Isolatorkörper
- 96: Eingussarmatur
- 98: Eingussarmatur
- 100: Eingussarmatur
- 102: Elektrodensegment
- 104: Untersegment
- 106: Untersegment
- 108: Anschlussteil
- 110: Anschlussteil
- 112: Außenring
- 114: Isolatorkörper (FIG. 7(b))
- 116: Eingussarmatur
- 118: Elektrodensegment
- 120: Anschlussteil
- 122: Anschlussteil
- 124: Isolatorkörper (FIG. 8(a))
- 126: Eingussarmatur
- 128: Elektrodensegment
- 130: Anschlussteil
- 136: Eingussarmatur (FIG. 8(b))
- 138: Elektrodensegment
- 140: Anschlussteil
- 146: Eingussarmatur (FIG. 9(a))
- 148: Elektrodensegment
- 150: Anschlussteil
- 156: Eingussarmatur (FIG. 9(b))
- 158: Elektrodensegment
- 160: Anschlussteil

## Patentansprüche

1. Isolator für eine Hochspannungsschaltanlage, mit einem Isolatorkörper (10), mindestens einer elektrisch leitfähigen Eingussarmatur (12), und mit mindestens einer elektrisch leitfähigen Elektrode (24) als Feldsteuerelement, wobei die Elektrode (24) zumindest abschnittsweise in Umfangsrichtung des Isolatorkörpers in Form einer Wendel aus einem drahtförmigen Material ausgebildet ist.

2. Isolator nach Anspruch 1, wobei der Isolatorkörper (10) aus Gießharz besteht und/oder als Schottisolator oder Stützisolator ausgebildet ist.

3. Isolator nach Anspruch 1 oder 2, wobei der Isolatorkörper (10) scheibenförmig ist, und die Elektrode (24) radial im Randbereich des Isolatorkörpers und in Umfangsrichtung des Isolatorkörpers angeordnet ist.

4. Isolator nach einem der Ansprüche 1 bis 3, wobei die Elektrode (24) aus mindestens einem Elektrodensegment besteht.

5. Isolator nach Anspruch 4, wobei sich das mindestens eine Elektrodensegment (102) in Umfangsrichtung beidseitig zur Eingussarmatur (96) erstreckt.

6. Isolator nach Anspruch 4 oder 5, wobei die Elektrode mehrerer, insbesondere drei, elektrisch voneinander isolierter Elektrodensegmenten (102, 104, 106) umfasst.

7. Isolator nach Anspruch 6 mit drei Eingussarmaturen (96, 98, 100) und drei entsprechend angeordneten Elektrodensegmenten (102, 104, 106.

8. Isolator nach einem der Ansprüche 5 bis 7, wobei das bzw. zumindest ein Elektrodensegment (72) aus mehreren, insbesondere zwei, Untersegmenten (73, 75) besteht, die an einer Verbindungsstelle (78) elektrisch miteinander verbunden sind.

9. Isolator nach einem der Ansprüche 1 bis 8, wobei das drahtförmige Material der Wendel elektrisch leitfähigen Kunststoff umfasst.

10. Isolator nach einem der Ansprüche 1 bis 9, wobei jedes Elektrodensegment (72) an seinen Enden in Umfangsrichtung je ein Anschlussteil (74, 76) aufweist.

11. Isolator nach einem der Ansprüche 1 bis 10, wobei die Einhüllende der Wendel der Elektrode (32) einen ellipsenartigen Querschnitt aufweist.

12. Isolator nach Anspruch 11, wobei der ellipsenartige Querschnitt der Einhüllenden der Wendel der Elektrode (36) nach Art einer Superellipse ausgebildet ist, bei welcher die beiden längeren und die beiden kürzeren Seiten einer Windung der Wendel im Vergleich zu einer Ellipse jeweils partiell abgeflachter verlaufen, so dass der Querschnitt der Einhüllenden rechteckförmiger als bei einer Ellipse ist.

13. Isolator nach Anspruch 11 oder 12, wobei der Querschnitt der Einhüllenden der Wendel der Elektrode (32; 36) einen größeren Durchmesser und einen kleineren Durchmesser senkrecht zu diesem aufweist, und der größere Durchmesser in Richtung einer Längsachse (Ax) des Isolatorkörpers (10) verläuft.

14. Isolator nach einem der Ansprüche 1 bis 13, wobei jeweils benachbarte Windungen der Wendel (28) einen so geringen Abstand in Richtung des Verlaufs der Wendel aufweisen, dass die Elektrode (24) ein Verhalten in einem elektrischen Feld ähnlich einem der Wendel entsprechenden Körper aus Vollmaterial aufweist.

15. Isolator nach einem der Ansprüche 4 bis 6, wobei das eine Elektrodensegment bzw. die elektrisch voneinander isolierten Elektrodensegmente jeweils eine Elektrode eines Teilentladungsdetektors bilden.

16. Isolator nach einem der Ansprüche 8 bis 15, wobei die Verbindungsstelle ein Anschlussteil (78; 88) aufweist, das zur Bereitstellung eines elektrischen Abgriffs ausgebildet ist.

17. Gasisolierte Schaltanlage (21, 23, 14, 25, 27) mit zumindest einem Isolator (10, 12, 24) nach einem der Ansprüche 1 bis 16.
